Europäisches Patentamt

European Patent Office

Office européen des brevets

(19)

(11) Veröffentlichungsnummer: **0 283 809**
**A2**

(12) # EUROPÄISCHE PATENTANMELDUNG

(21) Anmeldenummer: 88103473.0

(51) Int. Cl.⁴: **B29C 47/04** , B29C 47/12

(22) Anmeldetag: 05.03.88

(30) Priorität: 21.03.87 DE 3709411

(43) Veröffentlichungstag der Anmeldung:
28.09.88 Patentblatt 88/39

(84) Benannte Vertragsstaaten:
AT BE CH DE ES FR GB GR IT LI LU NL SE

(71) Anmelder: **Hüls Troisdorf Aktiengesellschaft**
**Postfach 11 65**
**D-5210 Troisdorf(DE)**

(72) Erfinder: **Schmitz, Adolf**
**Holbeinstrasse 11**
**D-5210 Troisdorf-Eschmar(DE)**
Erfinder: **Burghard, Walter**
**Piusstrasse 9**
**D-5210 Troisdorf-Oberlar(DE)**
Erfinder: **Klein, Waldemar**

**D-5203 Much-Schwellenbach 48(DE)**

(54) **Verfahren und Vorrichtung zur Herstellung von holzmaserstrukturähnlichen dünnen Schichten durch Coextrusion.**

(57) Es wird ein Verfahren und eine Vorrichtung zur Herstellung von holzmaserstrukturähnlichen dünnen Schichten durch Coextrusion zweier unterschiedlich eingefärbter Schmelzeströme beschrieben. Hierzu wird der erste Schmelzestrom quer zur Förderrichtung, d.h. in Breitenrichtung, ausgebreitet und mit dem zweiten Schmelzestrom, der zuvor in eine Mehrzahl einzelner Schmelzeströme aufgeteilt wurde, an einer Mehrzahl von Stellen vereinigt. Von den Vereinigungsstellen gehen unregelmäßig geformte Verteilerkanäle und/oder Verteilerstege aus, die eine inhomogene Vermischung der unterschiedlich eingefärbten Schmelzen an der Oberfläche des verinigten Schmelzestromes bewirken. Durch schwellende oder pulsierende Steuerung eines der Schmelzeströme wird eine dem natürlichen Holz sehr ähnliche Holzmaserung erreicht. Bevorzugtes Anwendungsgebiet der Erfindung ist die Oberflächenbeschichtung von Fensterprofilen durch Coextrusion.

Fig.1

EP 0 283 809 A2

# Verfahren und Vorrichtung zur Herstellung von holzmaserstrukturähnlichen Schichten durch Coextrusion

Die Erfindung betrifft ein Verfahren zur Herstellung von holzmaserstrukturähnlichen dünnen Schichten durch Coextrusion gemäß dem Oberbegriff des Anspruchs 1 und eine Vorrichtung zur Durchführung dieses Verfahrens gemäß dem Oberbegriff des Anspruchs 8.

Bevorzugtes Anwendungsgebiet der Erfindung ist die Herstellung von oberflächenbeschichteten Profilen wie Fensterprofilen o.dgl., wobei die Oberflächenbeschichtung ein holzähnliches Aussehen aufweist.

Ein gattungsgemäßes Verfahren ist aus der DE-OS 35 17 779-A 1 bekannt. Bei diesem bekannten Verfahren werden zur Erzeugung marmorierter Schichten zwei unterschiedlich eingefärbte Schmelzeströme in einem über die Breite der Schicht ungleichmäßig verlaufenden Zusammenführungsbereich vereinigt. Dabei wird der Grad der Vermischung durch Änderung des Drucks der einzelnen Masseströme zeitlich verändert.

Es hat sich herausgestellt, daß dieses Verfahren zur Erzeugung von der natürlichen Holzmaserung ähnlichen Schichten nicht geeignet ist, da an der Oberfläche der Schicht keine Marmorierung eintritt.

Es sind auch weitere Verfahren bekannt geworden zur Erzeugung diverser Musterungen, bei denen zwei oder mehr unterschiedlich eingefärbte Schmelzeströme vereinigt und inhomogen vermischt werden (DE-OS 21 17 045-A 1, DE-OS 25 23 836-A 1, US-PS 3,405,425). Diese Verfahren eignen sich jedoch nicht zur Erzeugung holzmaserstrukturähnlicher dünner Schichten durch Coextrusion.

Aufgabe der Erfindung ist es, ein Verfahren und eine Vorrichtung zur Erzeugung holzmaserstrukturähnlicher dünner Schichten durch Coextrusion zur Verfügung zu stellen.

Die Erfindung löst die Aufgabe durch ein Verfahren gemäß dem Anspruch 1 sowie durch eine Vorrichtung gemäß Anspruch 8.

Wesentliches Merkmal der Erfindung ist es, daß der erste Schmelzestrom bereits weitgehend in Richtung quer zur Förderrichtung - also in Breitenrichtung - ausgebreitet wurde, bevor er mit dem in einer Mehrzahl einzelner Schmelzeströme aufgeteilten zweiten thermoplastischem Kunststoff vereinigt und inhomogen vermischt wird. Die inhomogene Vermischung wird erfindungsgemäß dadurch erreicht, daß von den Zusammenflußbereichen Verteilerkanäle und/oder Verteilerstege ausgehen, die innerhalb des Fließkanals des vereinigten Schmelzestromes angeordnet sind. Diese Verteilerkanäle bzw. -stege haben bevorzugt eine Länge, die ein Mehrfaches ihrer Breite beträgt. Sie sind schräg oder sich windend in dem Fließkanal angeordnet.

Unter einer dünnen Schicht im Sinne dieser Erfindung wird eine Schicht verstanden, deren Ausdehnung in Dickenrichtung um ein Vielfaches kleiner ist als in Breitenrichtung. Insbesondere beträgt die Dicke der Schicht etwa 0,1 bis 2 mm, die Ausdehnung in Breitenrichtung mehr als 20 mm. Die Breite der Schicht ist grundsätzlich beliebig, insbesondere kann die Schicht auch 200 mm oder mehr in der Breite betragen.

Insbesondere kann die Schicht eine Oberflächenschicht eines mit der holzmaserstrukturähnlichen dünnen Schicht coextrudierten Profils sein, z.B. eines Fensterprofils. Ggf. kann die erfindungsgemäße dünne Schicht aber auch einzeln hergestellt und als Folie oder dünne Platte coextrudiert werden.

Um eine zeitlich variierende, inhomogene Vermischung und damit ein der natürlichen Holzmaserung entsprechendes Dekor zu erzeugen, wird in einer vorteilhaften Fortbildung der Erfindung vorgeschlagen, daß der zweite Schmelzestrom - schwellend und/oder intermittierend gefördert wird.

Auf diese Weise werden in überraschend einfacher Weise sehr natürliche Holzmaserungen erzeugt.

Bevorzugt wird für den ersten thermoplastischen Kunststoff ein hell-bis dunkelbraun eingefärbtes Polymethylmethacrylat (PMMA) und für den zweiten thermoplastischen Kunststoff ein - schwarz eingefärbtes PMMA eingesetzt, wobei der Mengenanteil des schwarz eingefärbten PMMA's - über einen längeren Zeitraum gemittelt - bevorzugt zwischen 0,5 und 10 %, insbesondere 1 bis 2 % beträgt.

Als PMMA wird bevorzugt ein solches mit einem Schmelzindex MFI 230/3,8 von 0,6 bis 11 g/10 Min (DIN 53 735), insbesondere von 2,5 bis 3,5 g/10 Min eingesetzt. Die Schmelzindizes der unterschiedlich eingefärbten PMMA-Typen sollen bevorzugt übereinstimmen, zur Erzielung besonderer Effekte können jedoch auch PMMA-Typen mit unterschiedlichen Schmelzindizes verwendet werden.

Bevorzugtes Einsatzgebiet des erfindungsgemäßen Verfahrens ist die Herstellung von Voll- oder Hohlprofilen, z.B. Fensterprofilen, mit einer Oberflächenbeschichtung, wobei die Oberflächenbeschichtung eine holzmaserstrukturähnliche Musterung aufweist.

Nach einer bevorzugten Ausgestaltung des erfindungsgemäßen Verfahrens wird dabei die aus zwei unterschiedlich eingefärbten PMMA-Schmelzeströmen gebildete holzmaserstrukturähnliche dünne Schicht durch Coextrusion mit dem Grundprofil verbunden. Als thermoplastischer Kunststoff für das Grundprofil wird bevorzugt Hart-PVC oder PVC-Schlagzäh eingesetzt.

Die gemäß der Erfindung vorgesehene Vorrichtung zur Herstellung der holzmaserstrukturähnlichen dünnen Schichten weist wenigstens zwei Plastifiziereinrichtungen auf zum Aufschmelzen und Fördern des ersten und des zweiten thermoplastischen Kunststoffs; weiterhin ist ein Breitschlitzwerkzeug o.dgl. mit Verteilerkanal vorgesehen, mit dem der erste Schmelzestrom in Breitenrichtung zu der dünnen Schicht ausgebreitet wird, sowie ein Formwerkzeug, mit dem der zweite Schmelzestrom aufgeteilt wird zu einer Mehrzahl von Schmelzeströmen, wobei das Formwerkzeug durch eine Mehrzahl von Kanälen in das Breitschlitzwerkzeug mündet und wobei in dem Breitschlitzwerkzeug, ausgehend von den Kanälen, eine Mehrzahl von Verteilerkanälen und/oder Verteilerstegen ausgeht, so daß der aufgeteilte zweite Schmelzestrom inhomogen mit dem ersten Schmelzestrom vermischt wird.

Bevorzugt wird als erste Plastifiziereinrichtung für den ersten Schmelzestrom ein Extruder eingesetzt, der einen weitgehend konstanten Schmelzefluß erzeugt, während als zweite Plastifiziereinrichtung für den zweiten Schmelzefluß bevorzugt ein Spritzgießwerkzeug eingesetzt wird. Hierdurch wird erreicht, daß der zweite Schmelzestrom intermittierend oder schwellend in den ersten Schmelzestrom eingespritzt wird. Ggf. kann für die zwei Plastifiziereinrichtung auch ein Extruder mit entsprechend regelbarem Förderverhalten eingesetzt werden.

Die erfindungsgemäße Vorrichtung weist weiterhin nach einer bevorzugten Ausführung der Erfindung einen dritten Extruder mit Formwerkzeug auf, mit dem ein dritter thermoplastischer Kunststoff zu einem Voll-oder Hohlprofil, z.B. einem Fensterprofil, geformt wird. Die zu der holzmaserstrukturähnlichen dünnen Schicht geformten (PMMA-)Schmelzeströme werden dabei in dem Fachmann bekannter Weise (DE-AS 22 65 035) mit dem Grundprofil, insbesondere aus Hart-PVC, vereinigt zu einem eine Oberflächenbeschichtung mit holzähnlichem Aussehen aufweisenden Profil.

Im folgenden wird die Erfindung anhand eines Ausführungsbeispiels und der Zeichnung näher erläutert.

Es zeigen dabei

Figur 1 einen Vertikalschnitt durch eine Vorrichtung zur Herstellung von holzmaserstrukturähnlichen dünnen Schichten,

Figur 2 einen Horizontalschnitt durch die Vorrichtung gemäß Figur 1,

Figur 3 einen Vertikalschnitt durch die Vorrichtung gemäß Figur 1,

Figur 4 einen Längsschnitt durch einen Verteilerkanal bzw. Verteilersteg gemäß Figur 3,

Figur 5 einen Querschnitt durch einen Verteilerkanal bzw. Verteilersteg gemäß Figur 4,

Figur 6 einige Profile mit holzmaserstrukturähnlicher Oberflächenbeschichtung.

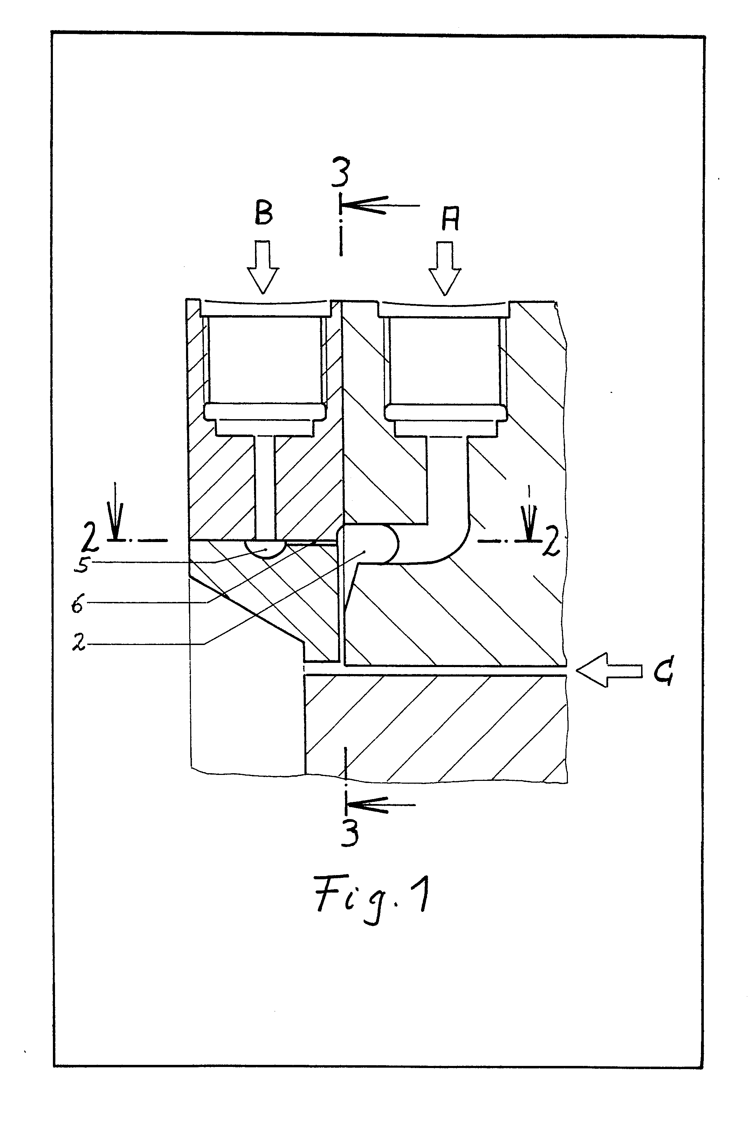

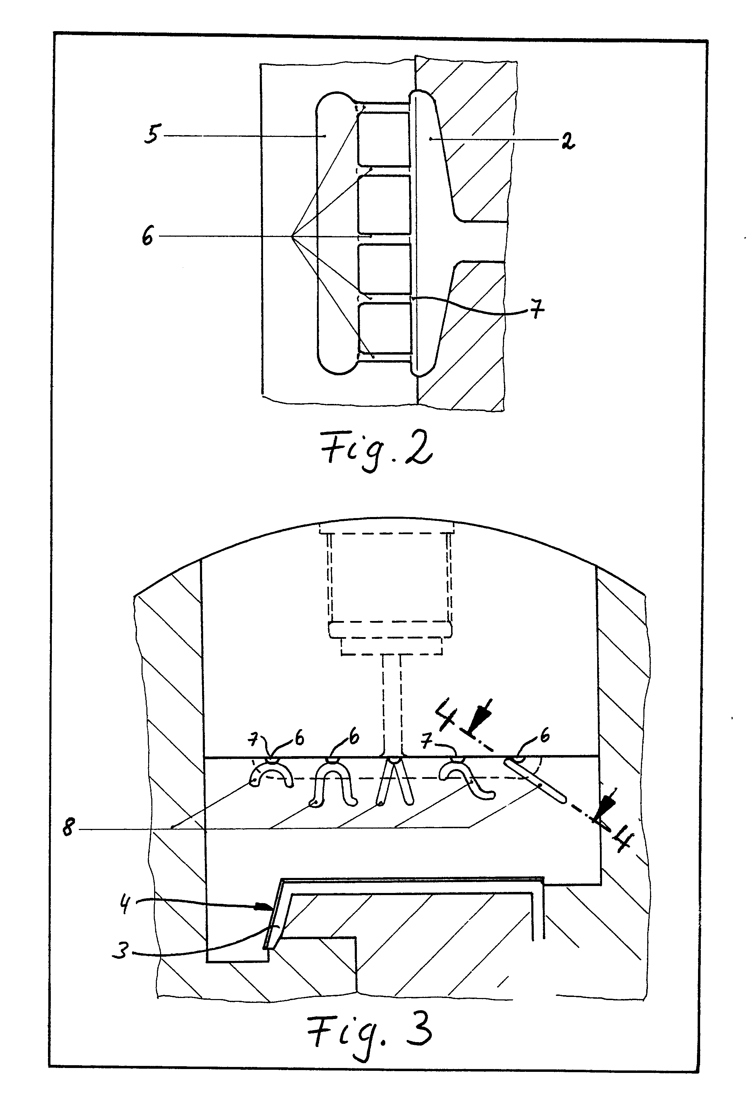

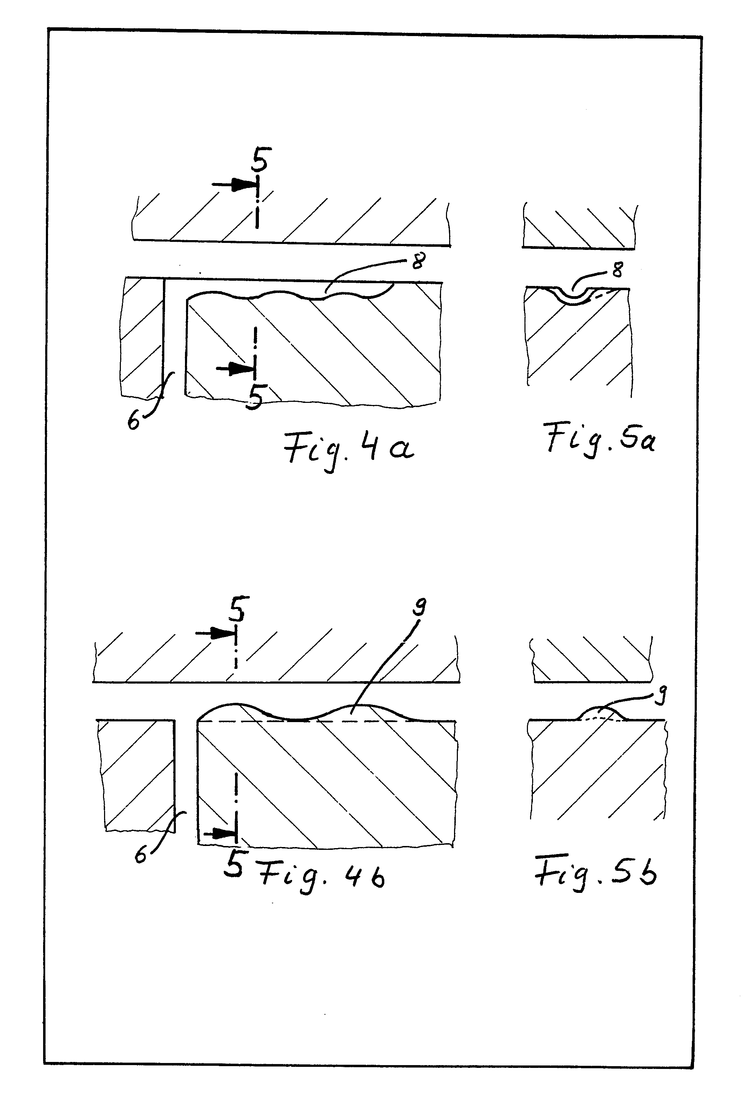

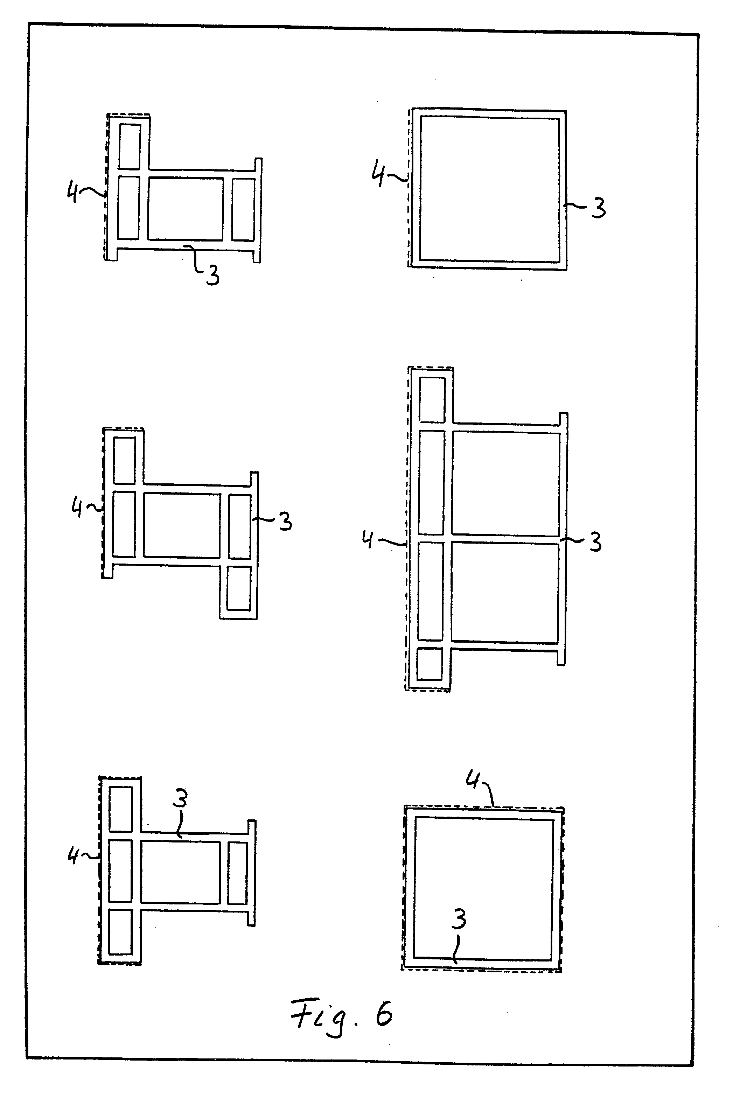

Gemäß dem Ausführungsbeispiel wird ein Fensterprofil 3 aus Hart-PVC gemäß der Figur 6 mit einer holzmaserstrukturähnlichen Oberflächenbeschichtung 4 coextrudiert. Gemäß dem Ausführungsbeispiel weist die Oberflächenbeschichtung 4 aus Polymethylmethacrylat (PMMA) eine Dicke von ca. 0,5 mm und eine Breite von ca. 100 mm auf.

Das erfindungsgemäße Verfahren ist jedoch nicht auf diese geometrischen Werte beschränkt, sondern es eignet sich für alle dünnen Schichten, deren Breitenausdehnung ein Mehrfaches ihrer Dicke beträgt.

In einem ersten Extruder (nicht dargestellt) wird ein erster Schmelzestrom A aus dunkelbraun eingefärbtem PMMA mit einem Schmelzindex MFI 230/3,8 von 3 g/10 Min (DIN 53 735) aufgeschmolzen und in dem Kleiderbügel-Werkzeug 2 quer zur Förderrichtung, d.h. in Breitenrichtung, ausgebreitet.

Durch eine nicht dargestellte Spritzgießmaschine wird parallel hierzu ein schwarz eingefärbtes PMMA mit gleichem Schmelzindex aufgeschmolzen. Dieser Schmelzestrom B wird in dem Verteilerkanal 5 in Breitenrichtung ausgebreitet und durch die Verbindungskanäle 6 mit dem ersten Schmelzestrom A vereinigt.

Die Verbindungskanäle 6 münden in Mündungsstellen 7 in das Werkzeug 2; von diesen Mündungsstellen 7 gehen Verteilerkanäle 8 bzw. Verteilerstege 9 aus. Diese Verteilerkanäle bzw. -stege bewirken, daß die schwarz eingefärbte Schmelze B unter Schlierenbildung inhomogen in der braunen Schmelze A verteilt wird. Erfindungswesentlich ist dabei, daß die inhomogene Verteilung der Schmelzen auf der später sichtbaren Oberfläche des bereits zumindest weitgehend in Breitenrichtung ausgebreiteten Schmelzestromes erfolgt.

In dem dargestellten Ausführungsbeispiel beträgt der Anteil der schwarzen Schmelze B - zeitlich gemittelt - etwa 1,5% des Gesamtschmelzestromes A + B, wobei der Durchsatz des Schmelzestromes B, durch eine Zufallssteuerung gesteuert, zwischen 0 und 3 % des Gesamt-PMMA-Schmelzestromes schwankt.

Nach der inhomogenen Vermischung der Schmelzeströme A und B wird der vereinigte Schmelzestrom mit dem PVC-Schmelzestrom C in an sich bekannter Weise coextrudiert und in nachfolgenden Stufen abgekühlt und kalibriert.

Figur 6 zeigt einige Profile 3 mit coextrudierter holzmaserstrukturähnlicher dünner Oberflächenbeschichtung 4 gemäß dem Ausführungsbeispiel. Ggf. können im Anschluß an die Coextrusion die Profile 3 an ihrer Oberfläche durch einen Prägeprozeß weiter veredelt werden.

### Ansprüche

1. Verfahren zur Herstellung von holzmaserstrukturähnlichen dünnen Schichten durch Coextrusion,
- wobei ein erster thermoplastischer Kunststoff mittels einer Plastifiziereinrichtung aufgeschmolzen wird zu einem ersten Schmelzestrom
--und in Richtung quer zur Förderrichtung (Breitenrichtung) ausgebreitet wird,
- wobei ein zweiter thermoplastischer Kunststoff mittels einer zweiten Plastifiziereinrichtung aufgeschmolzen wird zu einem zweiten Schmelzestrom,
--wobei der zweite Schmelzestrom eine andere Einfärbung aufweist als der erste Schmelzestrom,
- und wobei die beiden Schmelzeströme vereinigt und inhomogen vermischt werden,
**dadurch gekennzeichnet, daß**
-der zweite Schmelzestrom vor der Vereinigung mit dem ersten Schmelzestrom aufgeteilt wird in eine Mehrzahl einzelner Schmelzeströme,
- und daß unmittelbar nach der Vereinigung des aufgeteilten zweiten Schmelzestromes mit dem ersten Schmelzestrom durch von den Zusammenflußbereichen ausgehende Verteilerkanäle und/oder Verteilerstege eine inhomogene Vermischung der unterschiedlich eingefärbten Schmelzen an der Oberfläche des vereinigten Schmelzestromes erfolgt.

2. Verfahren nach Anspruch 1, dadurch gekennzeichnet, daß der zweite Schmelzestrom - schwellend und/oder intermittierend gefördert wird.

3. Verfahren nach Anspruch 1 oder 2, dadurch gekennzeichnet, daß der Mengenanteil des zweiten Schmelzestromes am Gesamtschmelzestrom 0,5 bis 10 % beträgt.

4. Verfahren nach einem der Ansprüche 1 bis 3, dadurch gekennzeichnet, daß als thermoplastischer Kunststoff für den ersten und zweiten Schmelzestrom jeweils ein hochpigmentiertes Polymethylmethacrylat (PMMA) verwendet wird.

5. Verfahren nach Anspruch 4, dadurch gekennzeichnet, daß das PMMA einen Schmelzindex MFI 230/3,8 von 0,6 bis 11 g/10 Min (DIN 53 735), insbesondere von 2,5 bis 3,5 g/10 Min aufweist.

6. Verfahren nach einem der Ansprüche 1 bis 5, dadurch gekennzeichnet, daß die holzmaserstrukturähnliche Schicht als Oberflächenbeschichtung eines Voll-oder Hohlprofils aus einem dritten thermoplastischen Kunststoff mit diesem coextrudiert wird.

7. Verfahren nach Anspruch 6, dadurch gekennzeichnet, daß als dritter thermoplastischer Kunststoff Hart-PVC verwendet wird.

8. Vorrichtung zur Herstellung von holzmaserstrukturähnlichen dünnen Schichten (4) durch Coextrusion,
- mit einer ersten Plastifiziereinrichtung zum Aufschmelzen und Fördern eines ersten thermoplastischen Kunststoffs zu einem ersten Schmelzestrom (A),
- mit einer zweiten Plastifiziereinrichtung zum Aufschmelzen und Fördern eines zweiten thermoplastischen Kunststoffs zu einem zweiten Schmelzestrom (B),
- mit einem Breitschlitzwerkzeug oder dgl. mit Verteilerkanal (2), mit dem der erste Schmelzestrom (A) in Breitenrichtung zu der dünnen Schicht (4) ausgebreitet wird,
gekennzeichnet durch
- ein Formwerkzeug (5) mit dem der zweite Schmelzestrom (B) aufgeteilt wird zu einer Mehrzahl von Schmelzeströmen,
--wobei das Formwerkzeug (5) durch eine Mehrzahl von Kanälen (6) in das Breitschlitzwerkzeug (2) mündet,
- und wobei in dem Breitschlitzwerkzeug (2), ausgehend von den Kanälen (6) eine Mehrzahl von Verteilerkanälen (8) oder Verteilerstegen (9) ausgeht, so daß der aufgeteilte zweite Schmelzestrom inhomogen mit dem ersten Schmelzestrom (A) vermischt wird.

9. Vorrichtung nach Anspruch 8, dadurch gekennzeichnet, daß als erste Plastifiziereinrichtung ein Extruder und als zweite Plastifiziereinrichtung eine Spritzgießmaschine eingesetzt wird.

10. Vorrichtung nach einem der Ansprüche 8 oder 9, dadurch gekennzeichnet, daß eine dritte Plastifiziereinrichtung vorgesehen ist, mit dem ein Voll-oder Hohlprofil (3) aus Hart-PVC extrudierbar ist, wobei die holzmaserstrukturähnliche dünne Schicht (4) als Oberflächenbeschichtung zusammen mit dem Hart-PVC-Profil (3) coextrudiert wird.

Fig. 1

Fig. 2

Fig. 3

Fig. 4a

Fig. 5a

Fig. 4b

Fig. 5b

Fig. 6